# EUROPÄISCHE PATENTANMELDUNG

(11) **EP 0 828 323 A2**
(43) Veröffentlichungstag der Anmeldung: **11.03.1998**
(21) Anmeldenummer: 97114502.4
(22) Anmeldetag: 21.08.1997
(51) Int. Cl.: H01R 25/14, H02G 5/04

(54) **Sammelschienensystem**

(30) Priorität: 30.08.1996 DE 19635234; 17.02.1997 DE 19706100
(71) Anmelder: SIEMENS AKTIENGESELLSCHAFT, 80333 München (DE)
(72) Erfinder: Hussong, Wolfgang, Dipl.-Ing., 91080 Uttenreuth (DE)

(57) **Zusammenfassung**

Ein integriertes Sammelschienensystem umfaßt eine ein Kammersystem (12) aufweisende Sammelschienenanordnung (1), auf die elektrische Verbraucherabzweige (5) aufsetzbar sind. Das Kammersystem (12) umfaßt eine Anzahl von ersten Kammern (13) zur Aufnahme von ersten Leiterschienen (2) zur Energieübertragung sowie darüber hinaus eine Anzahl von zweiten Kammern (14) zur Aufnahme von zweiten Leiterschienen (3) zur Hilfsenergieübertragung und eine dritte Kammer (15) zur Aufnahme eines Leiterelements (4) zur Kommunikationsübertragung. Der Verbraucherabzweig (5) ist als kommunikationsfähiger integrierter Verbraucherabzweig (5) ausgestaltet, innerhalb dessen Abzweiggehäuses (51) ein mit den ersten Leiterschienen (2) kontaktierbares Leistungsteil (59) und ein mit den zweiten Leiterschienen (3) sowie mit dem Leiterelement (4) kontaktierbares Steuerteil (60) vorgesehen sind.

## Beschreibung

Die Erfindung bezieht sich auf ein Sammelschienensystem, bei dem auf eine Sammelschienenanordnung eine Anzahl von an diese angepaßte elektrische Verbraucherabzweige aufsetzbar sind, wobei die Sammelschienenanordnung ein Trägerprofil mit einem kanalartigen Kammersystem aufweist, das eine Anzahl von ersten Kammern zur Aufnahme von ersten Leiterschienen zur Energieübertragung umfaßt. Unter Verbraucherabzweig wird hierbei ein elektronisches und/oder elektromechanisches Gerät, insbesondere ein Niederspannungsschaltgerät, wie z. B. ein Schütz, ein Motorschutzschalter o.dgl., verstanden.

Ein aus der europäischen Patentschrift EP 0 336 294 B1 bekanntes Sammelschienensystem dient zum Anschluß von elektrischen Geräten und ist aus einzelnen, z.B. rechteckförmigen Kupferprofilen aufgebaut, die zur Energieübertragung dienen. Dazu sind die Kupferprofile, insbesondere deren Enden, in isolierenden Sammelschienenträgern mechanisch fixiert, wobei die Kupferprofile zueinander parallel und mit jeweils gleichem Mittenabstand von z.B. 40 mm angeordnet sind. Üblicherweise sind drei bis fünf derartige Kupferprofile oder Leiterschienen in einer Sammelschiene vorgesehen.

Die Sammelschiene oder Sammelschienenanordnung wird üblicherweise vor Ort in einem Schaltschrank auf ein Montageblech geschraubt, so daß nach der Montage die Kupferprofile und diesen zugeordnete Seitenteile unverrückbar befestigt sind.

Da das Montageblech in der Regel keine Isolierung aufweist, ist stets darauf zu achten, daß unterhalb der Kupferprofile keine Metallteile, z.B. ein Schraubenkopf o.dgl., hervorstehen, welche die geforderten Spannungsabstände verletzen könnten. Daher wird, insbesondere bei einer kleinen Sammelschienenanordnung, zusätzlich eine Bodenwanne aus Isoliermaterial eingesetzt. Ein derartiges Sammelschienensystem besteht daher aus einer Vielzahl von Einzelteilen, die vor Ort zu dem gewünschten System zusammengefügt werden müssen. Bei einem Ausbau mit fünf Kupferprofilen ergeben sich allein für den Energieteil der Sammelschienenanordnung unter Einhaltung der Mittenabstände von 40 mm, 60 mm oder sogar 100 mm Gesamtsystembreiten von mindestens 160 mm, 240 mm bzw. 400 mm.

Aus den deutschen Offenlegungsschriften DE-A 32 38 483, DE-A 34 40 008 und DE-A 40 13 370 sowie aus der deutschen Gebrauchsmusterschrift DE-U 88 04 507 sind darüber hinaus auch kammerartig ausgebildete Sammelschienenanordnungen bekannt, in deren aus Isoliermaterial bestehenden Kammern eine Anzahl von Leiterschienen zur Energieübertragung zumindest teilweise einliegen. Nicht berücksichtigt dabei sind jedoch auch bei diesen bekannten Sammelschienensystemen die üblicherweise erforderlichen Hilfsenergiezuführungen und Kommunikations- oder Steuerteilzuführungen zu den elektrischen Geräten oder Verbraucherabzweigen. Vielmehr ist die Hilfsenergiezuführung für die Verbraucherabzweige in der Regel in Form eines zusätzlichen Kabelsystems für die Hilfsspannung aufgebaut. Ebenso ist das Kommunikationssystem üblicherweise als eine separate Einheit mit eigener Verkabelung ausgeführt. Die Ausgabegruppen einer überlagerten Steuerung entnommenen oder über Koppelglieder, z.B. Relais, geführten Hilfsspannungen sowie Steuer- und/oder Kommunikationssignale müssen den Verbraucherabzweigen somit bisher separat über ein Kabelsystem zugeführt werden.

Der Erfindung liegt daher die Aufgabe zugrunde, ein besonders einfach aufgebautes kompaktes Sammelschienensystem anzugeben, das einen besonders hohen Vorfertigungsgrad ermöglicht.

Diese Aufgabe wird erfindungsgemäß gelöst durch die Merkmale des Anspruchs 1. Dabei umfaßt das Sammelschienensystem eine integrierte Sammelschienenanordnung mit Leiterschienen sowohl für die Energieübertragung als auch für die Übertragung einer für die elektrischen Geräte oder Verbraucherabzweige erforderlichen Hilfsenergie als auch ein Leiterelement für die Kommunikation oder Steuersignalübertragung.

Dazu umfaßt das Kammersystem zusätzlich zu den Kammern für die Leiterschienen zur Energieübertragung als integrierten Bestandteil eine Anzahl weiterer oder zweiter Kammern zur Aufnahme entsprechender Leiterschienen zur Hilfsübertragung, wobei zweckmäßigerweise mindestens zwei Kammern für Hilfsenergieschienen vorgesehen sind. Ferner ist mindestens eine dritte Kammer zur Aufnahme des Leiterelements zur Kommunikationsübertragung in das Kammersystem integriert. Unter Leiterelement wird hierbei insbesondere eine Leiterplatte, ein Lichtwellenleiter o. dgl. verstanden.

Das Trägerprofil ist zweckmäßigerweise aus einem selbsttragenden Strangprofilteil und einem zusätzlichen, in dieses Strangprofilteil eingepaßten Isolierprofilteil aufgebaut. Dabei besteht das erste, tragende Profilteil vorteilhaftererweise aus einem Leichtmetall, z.B. aus Aluminium, während das zweite, isolierende Profilteil aus Kunststoff besteht. Eine oder jede Kammer des Kammersystems, deren Innenraum durch das isolierende Profilteil begrenzt ist, dient zur Aufnahme der dieser Kammer zugeordneten Leiter- oder Kupferprofilschiene. Alternativ kann das Trägerprofil auch aus einem einzigen isolierenden Profilteil oder in Form eines z. B. extrudierten Kunststoffstrangprofils aufgebaut sein. In beiden Fällen ist vorteilhafterweise ein selbsttragendes Trägerprofil gegeben. Zur Herstellung des Trägerprofils eignet sich besonders das an sich bekannte Strangpreßverfahren oder das Extrudierverfahren.

Unabhängig von der Wahl der Anzahl der Leiterschienen weist der isolierende Profilteil der Sammelschiene vorteilhafterweise stets die gleichen Abmessungen auf. So sind - z.B. für den Anschluß an ein Drehstromnetz bei drei oder fünf Kupferprofilschienen - die kanalartigen Kammern des Kammersystems für jede dieser Schienen gleich groß. Somit können in besonders einfacher Weise die Kupferprofile oder Leiterschienen in das selbsttragende Trägerprofil, d.h. in die Kammern des Kammersystems, hineingeschoben werden. Die Anzahl der Kammern für die Energieübertragung entspricht daher der Anzahl der Leiter in einem vorgegebenen Stromnetz.

Alle Kammern des Kammersystems sind zweckmäßigerweise nebeneinander angeordnet, so daß ein auf die integrierte Sammelschienenanordnung aufgestecktes elektrisches Gerät in Form eines Verbraucherabzweigs mit dessen Kontaktierung gleichzeitig sowohl die Energie- und Hilfsenergieübertragung als auch die Kommunikationsübertragung erfaßt. Bei Bedarf kann im Bereich der dritten Kammer zusätzlich eine elektrostatische und/oder elektromagnetische Abschirmung vorgesehen sein.

Obwohl der isolierende Profilteil des Trägerprofils bereits die erforderliche Fingersicherheit gewährleistet, ist vorteilhafterweise zusätzlich eine Isolierabdeckung vorgesehen, die sich zumindest über den Bereich der Energieübertragung des Kammersystems erstreckt. Zum Postionieren und Fixieren eines auf die Sammelschienenanordnung aufgesteckten Verbraucherabzweigs umfaßt das Trägerprofil in Längsrichtung mindestens einen kanalartigen Profilabschnitt zur Aufnahme entsprechender Gegenprofile als Halterungsmittel am Gehäuse des Verbraucherabzweigs.

Um einerseits ein besonders einfaches und kompaktes sowie in hohem Maße standardisiertes und damit wirtschaftliches Sammelschienensystem bereitzustellen, das andererseits einer vorgegebenen Strombelastung in besonders einfacher Weise angepaßt werden kann, ist in vorteilhafter Ausgestaltung das Kammersystem zur Aufnahme von für verschiedene Stromstärken ausgelegte Leiterschienen unterschiedlicher Querschnittsfläche ausgestaltet. Um dazu Leiterschienen oder Kupferprofile verschiedener Querschnittsabmessungen in Kammern vorteilhafterweise stets gleicher Abmessungen einbringen und dort sicher in ihre Lage halten zu können, weist die oder jede Kammer an mindestens einer Innenwand einen vorzugsweise angeformten Längssteg zum Positionieren und zum Halten der dieser Kammer zugeordneten Leiterschiene auf. Somit ist durch das vorteilhafterweise selbsttragende Trägerprofil sichergestellt, daß auch im Falle eines Kurzschlusses die Leiterschienen sicher in ihrer Lage gehalten werden. Darüber hinaus ist auch sichergestellt, daß bei Erwärmung der Leiterschienen diese sich spannungsfrei in Längsrichtung der Sammelschienenanordnung ausdehnen können.

Eine für die Sammelschienenanordnung des Sammelschienensystems besonders geeignete Leiterschiene ist somit zweckmäßigerweise ein elektrisch leitendes Längsprofil, dessen Querschnittsfläche der zu führenden Stromstärke und damit der Strombelastung angepaßt ist. Da die Kontaktierung der elektrischen Verbraucherabzweige oder Baugruppen üblicherweise über Kontaktdruckstücke in Form von Feder- oder Steckkontakten erfolgt, ist das oder jedes Längsprofil der Leiterschiene mit einer Ausnehmung versehen, in die der Kontakt in der Art einer Steckbuchse eindringt. Alternativ ist die Leiterschiene mit einer Erhebung für einen übergreifenden Steckkontakt versehen. Korrespondierende Öffnungen sind zweckmäßigerweise an der oder jeder Kammer des Kammersystems des Trägerprofils vorgesehen.

Bezüglich des elektrischen Gerätes oder Verbraucherabzweigs ist in vorteilhafter Weiterbildung des Sammelschienensystems sowohl ein mit Kontakten zur Energieübertragung verbundenes Leistungsteil als auch ein mit Kontakten zur Hilfsenergie- und Kommunikationsübertragung verbundenes Steuerteil innerhalb desselben Abzweiggehäuses vorgesehen. Dabei ist das Leistungsteil mit den ersten Leiterschienen und das Steuerteil sowohl mit den zweiten Leiterschienen als auch mit dem Leiterelement des Sammelschienensystems kontaktierbar.

Das den Leistungsteil des Verbraucherabzweigs steuernde Steuerteil steht zweckmäßigerweise über eine interne Datenleitung mit dem Leistungsteil in Verbindung. Ein mit dem Steuerteil über eine weitere interne Datenleitung in Verbindung stehendes und ebenfalls innerhalb des Abzweiggehäuses vorgesehenes Bedienteil für den Leistungsteil enthält funktional z. B. den mechanischen Teil eines Leistungsschalters, dessen Kontaktelementfunktion dann im Leistungsteil realisiert ist.

Über die internen Datenverbindungen steuert das Steuerteil in Abhängigkeit der vom Bedienteil empfangenen Signale oder Daten und/oder anhand von externen Steuersignalen das Leistungsteil. Die externen Steuersignale werden z. B. von einer übergeordneten oder überlagerten Steuerung (SIMATIC) vorgegeben und dem Steuerteil über das in die Sammelschienenanordnung integrierte Leiterelement zur Kommunikationsübertragung zugeführt. Über diese Kommunikationsverbindung erfolgt z. B. auch eine Signal- oder Datenübertragung für Rückmeldungen des Verbrauchers vom Verbraucherabzweig zur übergeordneten Steuerung sowie zur Signalübertragung zwischen verschiedenen Verbraucherabzweigen.

Des weiteren werden über die interne Datenverbindung auch Rückmeldungen vom Leistungsteil an das Steuerteil übertragen, das diese verarbeitet und daraus weitere Steuerbefehle für das Leistungsteil oder Rückmeldungen an das übergeordnete Steuersystem ableitet. Das Steuerteil verarbeitet ferner diesem über eine ausgangsseitige Signalschnittstelle zugeführte Rückmeldungen von einem untergeordneten Verbrauchersystem, das an einen Leistungsabgang des Verbraucheabzweigs z. B. zu einem Motor anschließbar ist. Zum Zuführen von Steuerspannungen zum Leistungsteil und/oder zum Bedienteil sind diese über Steuerleitungen mit der Kontaktierung des Verbraucherabzweigs zu den zur Hilfsenergieübertragung dienenden zweiten Leiterschienen der Sammelschienenanordnung verbunden.

Der Verbraucherabzweig ist vorteilhafterweise als kommunikationsfähiger integrierter Verbraucherabzweig ausgebildet. Dieser kann in der Art eines Hybridbausteins ausgestaltet und in hohem Maße vorgefertigt sein, wobei die Funktionalität z. B. eines Leistungsschalters im Leistungsteil realisiert ist, während im Steuerteil die Funktionalität z. B. eines Schützes enthalten ist. Der Anschluß an einen Verbraucher, z. B. an einen Motor oder an eine Heizung, erfolgt über einen Steck- oder Klemmkontakt am Leistungsabgang des Verbraucherabzweigs. An der Oberseite dessen Abzweiggehäuses können Bedienelemente und/oder Anzeigen vorgesehen sein, die mit dem Bedienteil verbunden sind.

Aufgrund des dadurch erreichbaren hohen Vorfertigungsgrads entfallen aufwendige Anschluß- und Montagearbeiten vor Ort, da das mit den gewünschten elektronischen und/oder elektromechanischen Komponenten bereits bestückte Abzweiggehäuse des elektrischen Verbraucherabzweigs lediglich auf die integrierte Sammelschienenanordnung aufgesteckt und der Anschluß zum Verbraucher hergestellt werden muß. Dabei können verschiedene Varianten von elektrischen Geräten oder Verbraucherabzweigen realisiert werden, wie z. B. Starter, Wendeschaltungen oder Frequenzumrichter. Auch lassen sich Sicherungen oder Schaltstücke zur sicheren Trennung im Servicefall integrieren.

Darüber hinaus kann das Gehäuse auch als Kühlkörper zur Wärmeabführung ausgebildet sein.

Die mit der Erfindung erzielten Vorteile bestehen insbesondere darin, daß durch Verwendung eines Trägerprofils mit einem kanalartigen Kammersystem zur Aufnahme einer Anzahl von Leiterschienen eine selbsttragende Sammelschienenanordnung gegeben ist, die sowohl eine Energie- und Hilfsenergieübertragung als auch eine Kommunikation vor Ort konzentriert. Insgesamt kann somit ein integriertes Sammelschienensystem mit hohem Vorfertigungsgrad bereitgestellt werden. Auch können elektrische Verbraucherabzweige, z.B. Niederspannungsschaltgeräte, als fertige Einheiten in einem Baukastensystem bereitgestellt werden, so daß eine Montage einzelner Funktionseinheiten mit separatem Kommunikations- oder Steuerteil nicht mehr erforderlich ist. Vielmehr steht eine kompakte Einheit zur Verfügung, wobei die verschiednenen elektronischen und/oder elektromechanischen Baugruppen in einfacher Weise auf das Sammelschienensystem aufgeschnappt werden. Dadurch ist eine vollständige elektrische Kontaktierung zum Verbraucherabzweig oder zur Baugruppe erreicht, wobei über den Kommunikationsteil in Form eines Kommunikationsbusses in einfacher und zuverlässiger Weise Daten an die Baugruppen abgegeben und von diesen abgeholt werden können. Die erforderliche Hilfsenergie, beispielsweise für ein Schütz, wird über einen Hilfsenergiebus in Form der Hilfsenergie-Leiterschienen in die Baugruppe eingespeist.

Aufgrund der kompakten Bauweise des Trägerprofils mit dem isolierenden Profilteil können die Kupferprofile oder Leiterschienen mit besonders geringen Mittenabständen von z.B. 20 mm zueinander angeordnet werden. Die Sammelschienenanordnung des Sammelschienensystems ist in besonders einfacher Weise schraubenlos zusammenbaubar, wobei an beiden Enden der Sammelschienenanordnung vorgesehene Seitenteile mit dem selbsttragenden Trägerprofil zu einer Einheit zusammengepreßt werden. Der Energie-, Hilfsenergie- und Kommunikations-Anschluß ist dann an diese Seitenteile möglich, wobei auch ein Kabelkanal integriert sein kann. Darüber hinaus ist aufgrund des Einsatzes unterschiedlicher Leiterschienen-Querschnitte oder Kupferprofile eine einfache Anpassung an verschiedene Strombelastungen möglich.

Ausführungsbeispiele der Erfindung werden anhand einer Zeichnung näher erläutert. Darin zeigen:
- FIG 1: schematisch in Aufsicht ein Sammelschienensystem mit auf eine Sammelschienenanordnung aufgestecktem elektrischem Verbraucherabzweig,
- FIG 2: ein Sammelschienensystem gemäß FIG 1 in perspektivischer Darstellung,
- FIG 3: das Sammelschienensystems gemäß FIG 2 im Querschnitt,
- FIG 4: im Querschnitt unterschiedliche Leiterschienenprofile in einer Kammer der Sammelschienenanordnung,
- FIG 5: ein Leiterschienen-Steckkontakt-System, und
- FIG 6: ein Prinzipschaltbild des Verbraucherabzweigs.

Einander entsprechende Teile sind in allen Figuren mit den gleichen Bezugszeichen versehen.

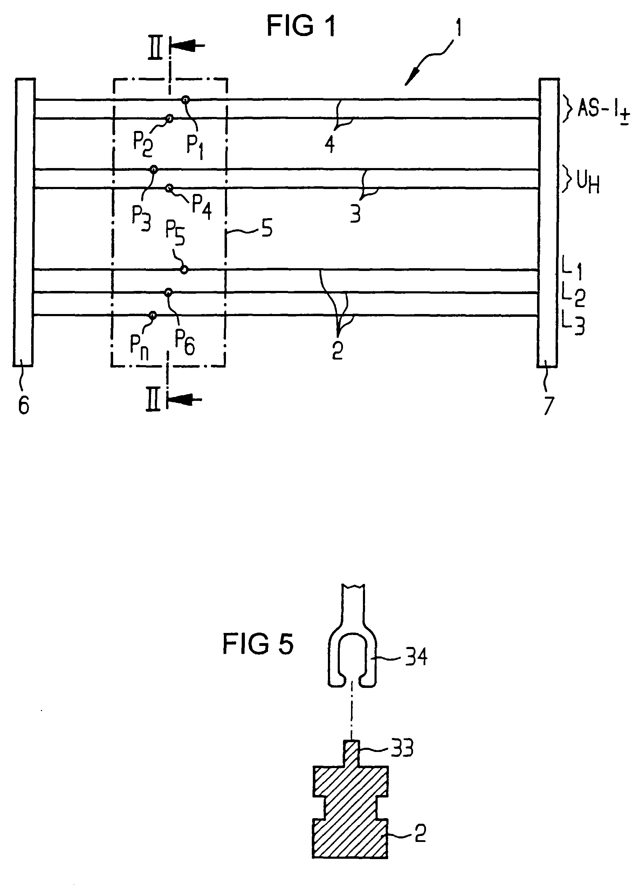

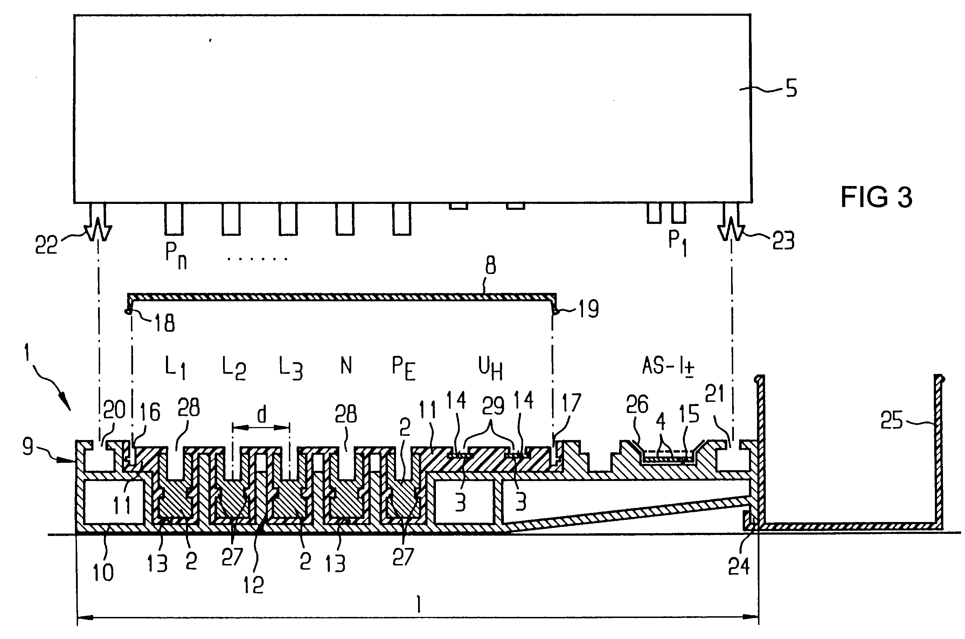

Das integrierte Sammelschienensystem gemäß FIG 1 umfaßt eine Sammelschienenanordnung 1 mit einer Anzahl von nebeneinander angeordneten und zueinander parallel verlaufenden Leiterschienen 2, 3 und 4. Auf die Sammelschienenanordnung 1 ist eine Baugruppe oder ein elektrisches Gerät, z.B. ein Niederspannungsschaltgerät, als Verbraucherabzweig 5 aufgesteckt und über Kontakte oder Anschlußpins P₁ bis Pₙ mit den diesen zugeordneten Schienen 2, 3, 4 kontaktiert. Seitenteile 6 und 7 schließen die Sammelschienenanordnung 1 an beiden Enden ab. Dabei dienen die vorzugsweise als Kupferprofile ausgebildeten Leiterschienen 2 zur Energieübertragung, beispielsweise eines dreiphasigen Drehstromnetzes mit den Leitern L₁, L₂ und L₃. Die Leiterschienen 3 dienen zur Übertragung einer Hilfsspannung U_{H} zu dem Verbraucherabzweig 5. Die Leiterschienen 4 repräsentieren einen Kommunikationsbus oder Aktor-Sensor-Interface AS-I_{±}. Ein elektrischer Anschluß der Leiterschienen 2, 3, 4 erfolgt in nicht näher dargestellter Art und Weise über die Seitenteile 6 und/oder 7. Das Schienensystem für die Energieübertragung kann auch aus fünf Leiterschienen 2 aufgebaut sein, wobei dann zusätzlich zu den Leitern L₁ bis L₃ ein Nulleiter N und eine Erdung PE (FIG 3) vorgesehen sind.

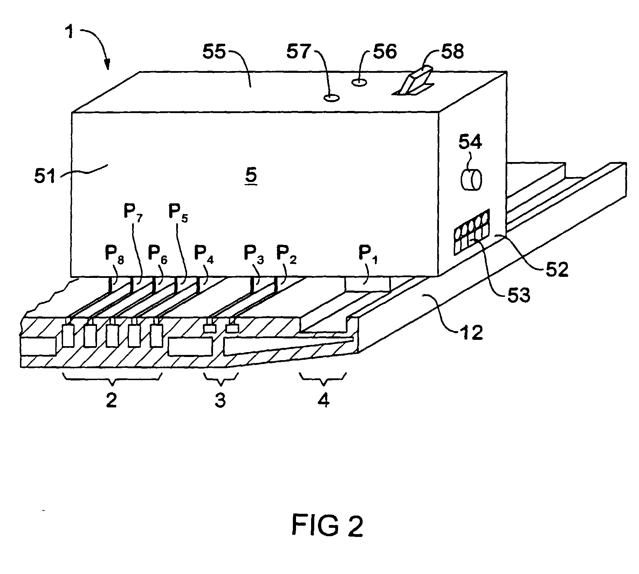

FIG 2 zeigt das integrierte Sammelschienensystem in einer perspektivischen Ansicht. Die Sammelschienenanordnung 1 umfaßt ein Kammersystem 12, in dem die Leiterschienen 2, 3 und 4 nebeneinander und zueinander parallel verlaufend angeordnet sind. Auf die Sammelschienenanordnung 1 ist der Verbraucherabzweig 5 aufgesteckt. Dabei sind im Ausführungsbeispiel gemäß FIG 2 acht Kontaktstellen P₁ bis P₈ auf der Unter- oder Bodenseite eines Abzweiggehäuses 51 des Verbraucherabzweigs 5 vorgesehen, über die der integrierte Verbraucherabzweig 5 mit Energie und Hilfsenergie sowie mit Steuer- und Meldesignalen versorgt wird. Dabei erfolgt im Ausführungsbeispiel nach FIG 2 die Steuer- und Meldesignalübertragung über den Kontaktanschluß P₁, der als Kommunikationsanschluß dient. Die Hilfsenergieübertragung mit z. B. einer Gleichspannung von 24V DC erfolgt über die Kontaktanschlüsse P₂ und P₃. Zur Energieübertragung dienen hier die Kontaktanschlüsse P₄ bis P₈, über die ein Anschluß z. B. an ein dreiphasiges Drehstromnetz mit den Leitern L1, L2, L3, N und PE für eine Wechselspannung von z. B. 400V AC erfolgt.

Der Verbraucherabzweig 5 weist an einer der parallel zu den Sammelschienen 2, 3 und 4 verlaufenden Seitenfläche 52 des Abzweiggehäuses 51 einen Leistungsabgangsstecker oder eine Leistungsabgangsklemme 53 sowie einen Signalanschluß oder eine Signalschnittstelle 54 auf. Auf der den Kontaktanschlüssen P₁ bis P₈ gegenüberliegenden Oberseite 55 des Abzweiggehäuses 51 ist ein Bedienfeld mit Anzeigeelementen 56 und 57, z. B. mit zwei Leuchtdioden (LED), sowie mit einem Schalter 58 vorgesehen. Der Verbraucherabzweig 5 ist somit in ein einzelnes Abzweiggehäuse 51 integriert, das in der Art einer 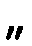 Black Box" den gesamten Verbraucherabzweig 5, vorzugsweise in Form eines Hybridbausteins, funktional enthält.

FIG 3 zeigt das Sammelschienensystem im Querschnitt mit von der Sammelschienenanordnung 1 abgehobenem Verbraucherabzweig 5 und abgehobener Isolierabdeckung 8. Die Sammelschienenanordnung 1 ist aus einem Trägerprofil 9 mit einem ersten tragenden Profilteil 10 und einem darin eingepaßten zweiten isolierenden Profilteil 11 aufgebaut. Das tragende Profilteil 10 sowie das isolierende Profilteil 11 sind vorteilhafterweise im Stranggußverfahren hergestellt. Dabei ist das tragende Profilteil 10 zweckmäßigerweise ein Leichtmetallprofil, z.B. ein Aluminium-Profil, während das isolierende Profilteil 11 zweckmäßigerweise ein Kunststoff-Profil ist. Alternativ kann anstelle einer derartigen Materialpaarung auch ein reines Kunststoff-Profil als Trägerprofil 9 verwendet werden.

Das Trägerprofil 9 des sowohl für Energie L₁ bis L₃, N, PE und Hilfsenergie U_{H} als auch für Kommunikation AS-I-_{±} vorgesehenen integrierten Sammelschienensystems bildet das Kammersystem 12 mit fünf ersten Kammern 13 zur Aufnahme der Leiterschienen 2 zur Energieübertragung. Es umfaßt weiter zwei zweite Kammern 14 zur Aufnahme der Leiterschienen 3 zur Hilfsenergieübertragung. Es umfaßt ferner eine dritte Kammer 15 zur Aufnahme des Kommunikationsbusses 4.

Im Bereich des isolierenden Profilteils 11 weist das Trägerprofil 9 für eine mechanische Steckverbindung sich in Längsrichtung der Sammelschienenanordnung 1 erstreckende nutförmige Profilabschnitte 16 und 17 zur Aufnahme entsprechender Gegenprofile 18 bzw. 19 der ebenfalls aus Kunststoff bestehenden Isolierabdeckung 8 auf. Weitere, sich gegenüberliegende Profilabschnitte 20 und 21 für eine mechanische Steckverbindung zum Trägerprofil 9 dienen zur Aufnahme entsprechender Gegenprofile 22 bzw. 23 an der Unterseite des Abzweiggehäuses 51 des Verbraucheranbzweigs 5. An der in FIG 3 rechten Seite der Sammelschienenanordnung 1 ist an das Trägerprofil 9 ein Steg 24 zum Einklinken eines dort anbringbaren Kabelkanals 25 angeformt.

Die Kammern 13, 14, 15 je Übertragungssystem, d.h. diejenigen für die Energieübertragung einerseits und diejenigen für die Hilfsenergieübertragung bzw. Kommunikation andererseits, sind jeweils bezüglich ihrer Abmessungen gleich ausgestaltet. Dabei ist die Kammer 15 für die Kommunikationsübertragung mit einer elektrostatischen und/oder elektromagnetischen Abschirmung 26 ausgekleidet. Die Kammern 13 für die Energieübertragung umfassen im Innenraum angeformte Längsstege 27. Vorzugsweise sind in jeder Kammer 13 zwei sich gegenüberliegende Längsstege 27 vorgesehen. Der obere Bereich jeder Kammer 13 sowie jeder Kammer 14 ist ganz oder teilweise offen. Im isolierenden Profilteil 11 der Kammern 13 und 14 sind in Längsrichtung nutförmig durchgehende Öffnungen 28 bzw. 29 vorgesehen. Durch diese Öffnungen 28, 29 wird die Kontaktierung des Verbraucherabzweigs 5 mit den Leiterschienen 2 und 3 hergestellt. Anstelle von durchgehenden nutförmigen Öffnungen 28, 29 können auch eine der Anzahl der Kontakte Pₙ entsprechende Anzahl von einzelnen, lochartigen Öffnungen vorgesehen sein.

Die selbsttragende, integrierte Sammelschienenanordnung 1 ist besonders kompakt aufgebaut. Seine Breite l beträgt für dreipolige Leiter- oder Sammelschienen 2 etwa 170 mm, während für fünfpolige Leiter- oder Sammelschienen 2 eine Breite l von 210 mm ausreichend ist. Zumindest bei der fünfpoligen Ausführung ist darüber hinaus noch eine Verminderung der Breite l um etwa 20-25 mm möglich. Der Mittenabstand d zwischen zwei benachbarten Leiterschienen 2 für die Energieübertragung ist auf 20 mm reduziert, wobei die erforderlichen Luft- und Kriechstrecken eingehalten werden.

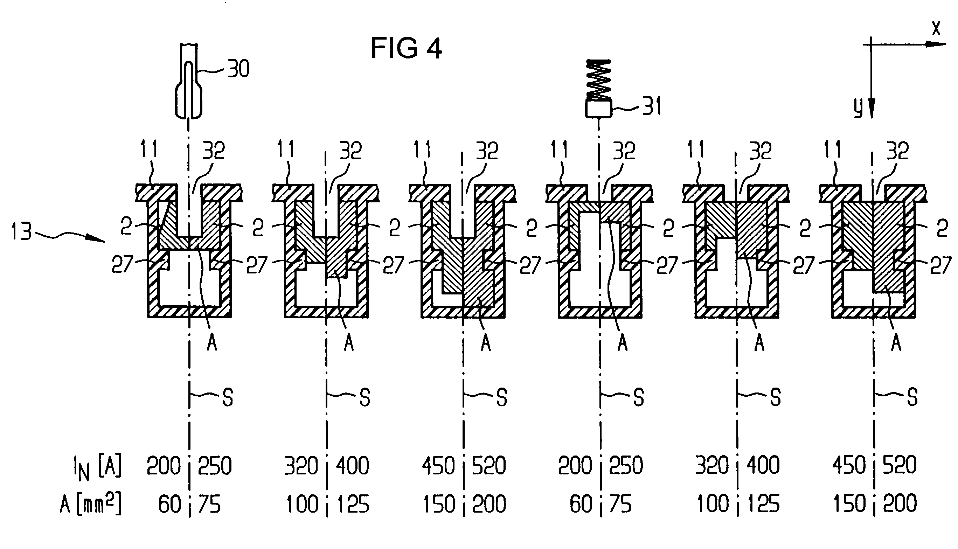

FIG 4 zeigt anhand einer einzelnen Kammer 13 für die Energieübertragung eine Anzahl von möglichen unterschiedlichen Querschnittsflächen A [mm²] für Leiterschienen 2 verschiedener Stromstärken oder Strombelastungen I_{N}[A]. Dabei sind zur Vereinfachung in jeder dargestellten Kammer 13 jeweils zwei Querschnittsprofile von Leiterschienen 2 - und somit jeweils zwei Halbprofile - gezeigt. Die strichpunktierte Mittellinie stellt jeweils die Symmetrieachse S dar. Die Zahlenwerte einer unterhalb der dargestellten Kammern 13 aufgeführten Matrix geben in deren ersten Zeile die maximalen Strombelastungen I_{N} und in deren zweiten Zeile die zugehörigen Querschnittsflächen A an. Bei vorgebbaren Strombelastungen I_{N} im Bereich von 200 bis 520 A kann somit eine entsprechende Querschnittsfläche A von 60 bis 200 mm² ausgewählt werden. Dies führt zu einer Materialeinsparung bei der Herstellung der als Leiterschienen 2 verwendeten Kupferprofile.

In den Ausführungsbeispielen gemäß FIG 4 sind zwei Hauptgruppen von Leiterschienen 2 dargestellt. Den in der linken Figurenhälfte gezeigten drei Leiterschienen 2 eines ersten Typs ist ein oberhalb der Kammer 13 dargestellter Steckkontakt 30 zugeordnet. Den in der rechten Figurenhälfte gezeigten drei Leiterschienen 2 eines zweiten Typs ist ein oberhalb der Kammer 13 dargestellter Federkontakt 31 zugeordnet. Die beiden dargestellten Hauptgruppen von Leiterschienen 2 unterscheiden sich bezüglich der Formgebung der Querschnittsflächen A somit im wesentlichen im Hinblick auf die Art der vorgesehenen Kontaktierung. So weisen die in der linken Figurenhälfte dargestellten, für den Steckkontakt 30 vorgesehenen Ausführungsformen der Leiterschiene 2 eine Ausnehmung 32 auf. Demgegenüber sind die in der rechten Figurenhälfte dargestellten Leiterschienen 2 an deren dem Federkontakt 31 zugewandten Seite plan.

Bei allen dargestellten Ausführungsbeispielen liegen die Leiterschienen oder Kupferprofile 2 im isolierenden Profilteil 11 mit den beiden Längsstegen 27. Die Längsstege 27 gewährleisten den sicheren Halt der Leiterschienen 2 und dienen als Auflage für Leiterschienen 2 mit vergleichsweise kleinerem Querschnitt A. Die spezielle Formgebung der Leiterschienen 2 ist dabei so gewählt, daß jede Leiterschiene 2 sowohl der in der linken Figurenhälfte als auch der in der rechten Figurenhälfte dargestellten Hauptgruppe in stets den gleichen isolierenden Profilteil 11 aufgenommen werden kann. Die unterschiedlichen Querschnittsflächen A werden in einfacher Weise erreicht, indem die Querschnitte der Leiterschienen 2 in Richtung der dargestellten y-Achse flächenmäßig verändert werden. Mit anderen Worten: Während mit zunehmender Strombelastung I_{N} die Abmessungen in x-Richtung konstant bleiben, nehmen die Abmessungen nur in y-Richtung zu.

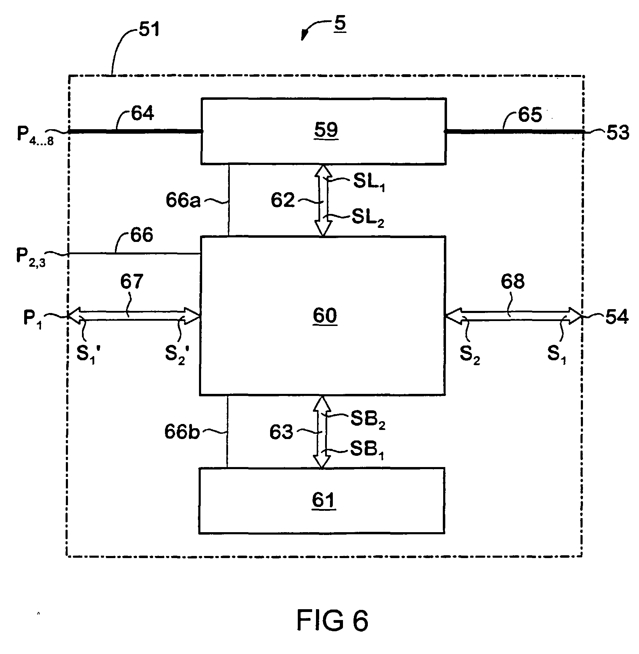

FIG 5 zeigt eine ebenfalls in die Kammer 13 des Kammersystems 12 einführbare Leiterschiene 2 oder ein Kupferprofil mit einer Erhebung 33, auf die ein übergreifender Steckkontakt 34 aufsteckbar ist.

Bei der Auslegung des Sammelschienensystems werden die Leiterschienen 2 oder Kupferprofile lediglich in das isolierende Profilteil 11 der Sammelschieneanordnung 1 hineingeschoben. Sie sind dann ohne weitere Fixierung, z.B. ohne weitere Verschraubung, ortsfest an ihrem Einbauplatz angeordnet. Den Abschluß der Sammelschienenanordnung 1 bilden die isolierenden Seitenteile 6 und 7.

Den Aufbau des Verbraucherabzweigs 5 zeigt FIG 6 in einem Prinzipschaltbild. Der Verbraucherabzweig 5 umfaßt innerhalb des Abzweiggehäuses 51 als funktionale Bestandteile ein Leistungsteil 59 und ein Steuerteil 60 sowie ein Bedienteil 61. Das Leistungsteil 59 und das Steuerteil 60 kommunizieren untereinander über eine bidirektionale Daten- oder Signalverbindung 62. Analog kommuniziert das Steuerteil 60 über eine bidirektionale Daten- oder Signalverbindung 63 mit dem Bedienteil 61. Die Energieübertragung von der Leiterschiene 2 auf das Leistungsteil 59 erfolgt über eine Leistungszuführung 64. Ein Leistungsabgang 65 des Leistungsteils 59 führt in die Leistungsabgangsklemme 63 des Abzweiggehäuses 51.

Analog erfolgt die Hilfsenergieübertragung von der Leiterschiene 3 zum Steuerteil 60 über eine an die Kontaktanschlüsse P₂ und P₃ geführte Hilfsenergiezuführung 66. Diese ist zweckmäßigerweise vom Steuerteil 60 einerseits über einen Abzweig 66a zum Leistungsteil 59 und andererseits über einen Abzweig 66b zum Bedienteil 61 weitergeführt, so daß die Hilfsenergie als Steuerspannung auch dort jeweils zur Verfügung steht. Die Kommunikationsübertragung zum Steuerteil 60 erfolgt über einen bidirektionalen internen Kommunikations- oder Signalbus 67, der an den Kontaktanschluß P₁ des Abzweiggehäuses 51 geführt ist.

Die Zuführungen 64, 66 und 67 erfolgen auf der Leiterschienenseite, wobei die Kommunikationsübertragung über den Kontaktanschluß P₁ von und zu einem übergeordneten Steuersystem, z. B. einer SIMATIC, erfolgt. Verbraucherseitig weist der Verbraucherabzweig 5 zusätzlich zum Leistungsabgang 65 einen an die Signalschnittstelle 54 geführten internen bidirektionalen Signal- oder Datenbus 68 auf, der mit dem Steuerteil 60 verbunden ist. Der Signalbus 68 dient als Signalschnittstelle zum (nicht dargestellten) Verbraucher, z. B. zu einem Motor, zu einer Beleuchtung oder zu einer Heizung, und somit zur Übertragung von Steuersignalen S₁ zum Verbraucher. Vom Verbraucher erzeugte Rückmeldungen S₂, z. B. Temperaturmeßdaten oder ein Endschaltersignal, werden über diesen internen Signalbus 68 an das Steuerteil 60 übertragen. Analog werden über den internen Datenbus 67 Steuersignale S'₁ von der übergeordneten Steuerung an das Steuerteil 60 übertragen. Auch werden über diesen internen Datenbus 67 Rückmeldungen S'₂ vom Steuerteil 60 an das übergeordnete Steuersystem oder an weitere Verbraucherabzweige übertragen.

Über die interne Datenverbindung 63 sendet das Steuerteil 60 Steuersignale SB₁ zum Bedienteil 61 und empfängt Rückmeldungen SB₂ von diesem. Es steuert dabei z. B. die mit dem Bedienteil 61 verbundenen Anzeigen 56 und 57 an. Mittels des Bedienschalters 58 kann über das Bedienteil 61 auf Testbetrieb umgeschaltet werden, wobei eine ensprechende Meldung dem Steuerteil 60 zugeführt wird. Über die Datenverbindung 62 sendet das Steuerteil 60 ebenso Steuersignale SL₁ an das Leistungsteil 39 und empfängt Rückmeldungen SL₂ von diesem. Die Rückmeldungen SB₂, SL₂ ,S₂ und/oder S'₂ werden im Steuerteil 60 verarbeitet oder vorverarbeitet.

Das Steuerteil 60 umfaßt vorzugsweise einen Prozessor mit einem Speicher (RAM, EPROM), der vor Ort anwenderspezifisch parametriert oder programmiert werden kann. Die Funktionalität des Steuerteils 60 entspricht beispielsweise der eines Schützes. Analog ist die Funktionalität eines herkömmlichen Leistungsschalters, z. B. dessen Kontaktelemente, im Leistungsteil 59 realisiert. Das Bedienteil 61 würde dann den mechanischen Schalterteil des Leistungsschalters enthalten.

In dem Abzweiggehäuse 51 des Verbraucherabzweigs 5 ist somit die gesamte Funktionalität eines herkömmlichen Schaltgerätes inklusive der erforderlichen Kommunikations- und Steuerelektronik integriert. Ebenso sind alle Verbindungen zwischen den einzelnen Bestandteilen oder Schaltgliedern des Schaltgerätes bereits innerhalb des Abzweiggehäuses 51 hergestellt. Über den internen Datenbus 67 kann die Programmierung vom übergeordneten Steuersystem erfolgen, z. B. durch Vorgabe eines Stromwertes für eine Kurzschlußabschaltung oder durch Eingabe von Kurzschlußkennlinien. Der bereits alle erforderlichen Funktionen beinhaltende Verbraucherabzweig 5 ist somit gegebenenfalls vor Ort lediglich zu programmieren und über den Leistungsabgang 65 sowie die Signalschnittstelle 54 mit dem jeweiligen Verbraucher zu verbinden. Die verbraucherspezifisch Bestückung des Verbraucherabzweigs 5 kann somit bereits bei der Herstellung erfolgen, so daß ein hoher Vorfertigungsgrad erzielt ist.

## Patentansprüche

1. Sammelschienensystem, bei dem auf eine Sammelschienenanordnung (1) eine Anzahl von an diese angepaßte elektrische Verbraucherabzweige (5) aufsetzbar sind, wobei die Sammelschienenanordnung (1) ein Trägerprofil (9) mit einem kanalartigen Kammersystem (12) aufweist, das eine Anzahl von ersten Kammern (13) zur Aufnahme von ersten Leiterschienen (2) zur Energieübertragung aufweist, **dadurch gekennzeichnet**, daß das Kammersystem (12) eine Anzahl von zweiten Kammern (14) zur Aufnahme von zweiten Leiterschienen (3) zur Hilfsenergieübertragung und eine dritte Kammer (15) zur Aufnahme eines Leiterelements (4) zur Kommunikationsübertragung umfaßt.

2. Sammelschienensystem nach Anspruch 1, **dadurch gekennzeichnet**, daß das Trägerprofil (9) aus einem ersten tragenden Profilteil (10) und aus einem darin eingepaßten zweiten isolierenden Profilteil (11) aufgebaut ist.

3. Sammelschienensystem nach Anspruch 2, **dadurch gekennzeichnet**, daß das erste tragende Profilteil (10) aus Leichtmetall und das zweite isolierende Profilteil (11) aus Kunststoff besteht.

4. Sammelschienensystem nach Anspruch 1, **dadurch gekennzeichnet**, daß das Trägerprofil (9) aus einem einzigen isolierenden Profilteil aufgebaut ist.

5. Sammelschienensystem nach einem der Ansprüche 1 bis 4, **dadurch gekennzeichnet**, daß im Bereich der dritten Kammer (15) eine Abschirmung (26) vorgesehen ist.

6. Sammelschienensystem nach einem der Ansprüche 1 bis 5, **gekennzeichnet durch** eine sich über mindestens einen Teil des Trägerprofils (9) erstreckende Isolierabdeckung (8).

7. Sammelschienensystem nach einem der Ansprüche 1 bis 6, **dadurch gekennzeichnet**, daß das Trägerprofil (9) mindestens einen Profilabschnitt (20, 21) zur Aufnahme einer Gerätefixierung (22, 23) umfaßt.

8. Sammelschienensystem nach einem der vorhergehenden Ansprüche, **dadurch gekennzeichnet**, daß die oder jede Kammer (13) des Kammersystems (12) zur Aufnahme von Leiterschienen (2) unterschiedlicher Querschnittsfläche (A) ausgestaltet ist.

9. Sammelschienensystem nach einem der vorhergehenden Ansprüche, **dadurch gekennzeichnet**, daß die oder jede Kammer (13) des Kammersystems (12) an mindestens einer Innenwand einen Längssteg (27) zum Positionieren der dieser Kammer (13) zugeordneten Leiterschiene (2) aufweist.

10. Sammelschienensystem nach einem der vorhergehenden Ansprüche, **dadurch gekennzeichnet**, daß die oder jede Kammer (13, 14, 15) des Kammersystems (12) eine Öffnung (28, 29) zur Aufnahme eines Kontaktes (30, 31; Pₙ) aufweist.

11. Sammelschienensystem nach einem der vorhergehenden Ansprüche, **dadurch gekennzeichnet**, daß das Trägerprofil (9) einen Steg (24) zum Einklinken eines Kabelkanals (25) aufweist.

12. Sammelschienensystem nach einem der Ansprüche 1 bis 11, **gekennzeichnet durch** eine Leiterschiene (2) mit einem Längsprofil, dessen Querschnittsfläche (A) der zu führenden Stromstärke (I_{N}) angepaßt ist.

13. Sammelschienensystem nach Anspruch 12, **dadurch gekennzeichnet**, daß das Längsprofil eine Ausnehmung (32) zur Aufnahme eines Steckkontaktes (30) aufweist.

14. Sammelschienensystem nach Anspruch 13, **dadurch gekennzeichnet**, daß das Längsprofil eine Erhebung (32) für einen diese übergreifenden Steckkontakt (33) aufweist.

15. Verbraucherabzweig für ein Sammelschienensystem nach einem der vorhergehenden Ansprüche, **dadurch gekennzeichnet,** daß innerhalb desselben Abzweiggehäuses (51) ein mit den ersten Leiterschienen (2) kontaktierbares Leistungsteil (59) und ein mit den zweiten Leiterschienen (3) sowie mit dem Leiterelement (4) kontaktierbares Steuerteil (60) vorgesehen sind.

16. Verbraucherabzweig nach Anspruch 15, **dadurch** **gekennzeichnet**, daß das Steuerteil (60) eine erste Datenverbindundung (62) zum Leistungsteil (59) und eine zweite Datenverbindung (63) zu einem innerhalb des Abzweiggehäuses (51) vorgesehenen Bedienteil (61) aufweist.

17. Verbraucherabzweig nach Anspruch 15 oder 16, **dadurch gekennzeichnet**, daß das Steuerteil (60) ausgangsseitig eine Signalschnittstelle (68) aufweist.

18. Verbraucherabzweig nach einem der Ansprüche 15 bis 17, **dadurch gekennzeichnet**, daß das Steuerteil (60) eine Verbindung (66a) zur Hilfsenergieübertragung zum Leistungsteil (59) aufweist.

19. Verbraucherabzweig nach einem der Ansprüche 15 bis 18, **dadurch gekennzeichnet**, daß das Steuerteil (60) eine Verbindung (66b) zur Hilfsenergieübertragung zum Bedienteil (61) aufweist.
